# EUROPEAN PATENT APPLICATION

(11) **EP 1 777 934 A1**
(43) Date of publication of application: **25.04.2007**
(21) Application number: 06021564.7
(22) Date of filing: 13.10.2006
(51) Int. Cl.: H04N 1/32

(54) **Image recording apparatus**

(30) Priority: 24.10.2005 JP 2005309111
(71) Applicant: SHARP KABUSHIKI KAISHA, Osaka-shi, Osaka 545-8522 (JP)
(72) Inventor: Wada, Masahiro, Souraku-gun, Kyoto 619-0224 (JP)
(74) Representative: Müller - Hoffmann & Partner

(57) **Abstract**

An image recording apparatus, which sets a space on a sheet that permits recording of images, for recording an image based on externally received image data within the space on a sheet, includes receiving means for receiving settings about information to be recorded together with the image, space securing means for securing a space for recording the information within the set space, and means for recording the information within the secured space when recording the image on a sheet.

## Description

### BACKGROUND OF THE INVENTION

### 1. Field of the Invention

The present invention relates to an image recording apparatus capable of adding information to an image to be recorded.

### 2. Description of Related Art

In image recording apparatuses such as a printer, a facsimile machine, and a digital all-in-one having a combination of the printer and facsimile functions, great importance starts to be attached to protecting the confidentiality of documents to be handled. For instance, there was proposed image recording apparatuses in which, when a confidential document is copied, the copy is stored in a storage box having a lock, and then the copy is allowed to be taken out by the operation of unlocking the key (see, for example, Japanese Patent Applications Laid-Open No. 58-215864 (1983) and No. 04-48323 (1989)).

In the image recording apparatus disclosed in Japanese Patent Application Laid-Open No. 58-215864 (1983), when image data is received by confidential transmission, paper on which an image is recorded based on the image data is discharged into a paper discharge box with a lid having a lock. The paper stored in the paper discharge box is allowed to be taken out by unlocking the lock. On the other hand, in the image recording apparatus disclosed in Japanese Patent Application Laid-Open No. 04-48323 (1989)), paper outputted by the operation of a specified user is discharged into a special stacker, and the paper in the stacker is allowed to be taken out only when the specified user is confirmed by inputting a password.

In such image recording apparatuses, however, it is necessary to install a special device such as a paper discharge box with a lid having a lock, and a stacker that permits the paper to be taken out when a password is input. Hence, these apparatuses have problems that the sizes of the apparatuses become larger, and the costs become higher.

In order to solve these problems, there was proposed an image recording apparatus that adds information about the user to a copy (see, for example, Japanese Patent Application Laid-Open No. 01-96663 (1986)). In the image recording apparatus disclosed in Japanese Patent Application Laid-Open No. 01-96663 (1986)), when copying a document, the image of a read document is reduced slightly in order to add information about the user, and the information about the user is recorded in the margin created by the reduction. Since the source of a copy created by such an image recording apparatus is expressed, there is an advantageous effect in restricting secondary copying.

In the image recording apparatus disclosed in Japanese Patent Application Laid-Open No. 01-96663 (1986)), however, it is necessary to reduce the original image in order to add the information about the user, and consequently, there is a problem that the image may be degraded by the reduction. Moreover, since the original image is reduced, there are problems that some user may not like the reduced image, or the reduced image may not be usable depending on the purposes of copies.

Further, even when copying a plurality of sheets of document, a copy with the additional information about the user is created only for one sheet of document, and copies without the additional information are created separately. Therefore, if a copy is taken out by a malicious third party, there is still a problem that secondary copies may be created unlimitedly.

### BRIEF SUMMARY OF THE INVENTION

The present invention has been made with the aim of solving the above problems, and it is an object of the present invention to provide an image recording apparatus constructed to secure a space for recording information within an space that permits recording of images and record information within the secured space when recording an image based on externally received image data on a sheet, and thereby capable of adding information without reducing the image, and capable of expressing the source of recorded matter to restrict secondary copying.

An image recording apparatus according to the present invention is an image recording apparatus which sets a space on a sheet that permits recording of images, for recording an image based on externally received image data within the space on a sheet, and characterized by comprising: means for receiving settings about information to be recorded together with the image; space securing means for securing a space for recording the information within the set space; and means for recording the information within the secured space when recording the image on a sheet.

In this invention, the space for recording the information is secured within the space that permits recording of images, and the information is recorded in the secured space when recording an image based on externally received image data on a sheet. Therefore, there is no need to reduce the image to secure the space.

An image recording apparatus according to the present invention is an image recording apparatus for recording an image based on externally received image data on a sheet, and characterized by comprising: means for receiving settings about information to be recorded together with the image; space securing means for securing a space for recording the information outside recording space of the image; and means for recording the information within the secured space when recording the image on a sheet.

In this invention, the space for recording the information is secured outside the recording space of the image, and the information is recorded in the secured space when recording the image based on externally received image data on a sheet. Therefore, there is no need to reduce the image to secure the space.

An image recording apparatus according to the present invention is an image recording apparatus which sets a space on a sheet that permits recording of images, for recording an image based on externally received image data within the space on a sheet, and characterized by comprising: means for receiving settings about information to be recorded together with the image; space securing means for securing a space for recording the information within the set space, but outside a recording space of the image; and means for recording the information within the secured space when recording the image on a sheet.

In this invention, the space for recording the information is secured within an space that permits recording of images, but outside the recording space of the image, and the information is recorded in the secured space when recording the image based on externally received image data on a sheet. Therefore, there is no need to reduce the image to secure the space.

The image recording apparatus according to the present invention is characterized in that the space securing means comprises means for deleting an image that exists in the space to be secured.

In this invention, the image that exists in the space to be secured is deleted, and therefore, if no image exists in the space, the original image is recorded as it is. Moreover, even when an image exists in the space, if the space to be secured is set as small as possible, it is possible to minimize the deformation of the image.

The image recording apparatus according to the present invention is characterized in that a plurality of pieces of the information are recorded within the space secured by the space securing means.

In this invention, since a plurality of pieces of information are recorded in the secured space, it is possible to increase the effect of restricting secondary copying.

The image recording apparatus according to the present invention is characterized by comprising means for receiving settings about a plurality of kinds of information to be recorded together with the image, wherein the plurality of kinds of information are recorded in the space secured by the space securing means.

In this invention, since a plurality of kinds of information are recorded in the secured space, it is possible to readily express the source of copied matter.

According to the present invention, the space for recording information is secured within a space that permits recording of images, and the information is recorded in the secured space when recording the image based on externally received image data on a sheet. Therefore, there is no need to reduce the image to secure the space, and, in the case of some images to be recorded, it is possible to add information without deforming the images at all. Moreover, by setting information about the user as the information to be added, it is possible to express the source of recorded mater, and it is possible to obtain the effect of restricting a third party from performing secondary copying.

According to the present invention, the space for recording information is secured outside a space that permits recording of images, and the information is recorded in the secured space when recording an image based on externally received image data on a sheet. Therefore, there is no need to reduce the image to secure the space, and, in the case of some images to be recorded, it is possible to add information without deforming the images at all. Moreover, by setting information about the user as the information to be added, it is possible to express the source of recorded mater, and it is possible to obtain the effect of restricting a third party from performing secondary copying.

According to the present invention, the space for recording information is secured within a space that permits recording of images, but outside the recording space of the image, and the information is recorded in the secured space when recording the image based on externally received image data on a sheet. Therefore, there is no need reduce the image to secure the space, and, in the case of some images to be recorded, it is possible to add the information without deforming the images at all. Moreover, by setting information about the user as the information to be added, it is possible to express the source of recorded mater, and it is possible to obtain the effect of restricting a third party from performing secondary copying.

According to the present invention, since an image that exists within the space to be secured is deleted, if no image exists within the space, the original image is recorded as it is. Moreover, even when an image exists in the space, if the space to be secured is set as small as possible, it is possible to minimize the deformation of the image.

According to this invention, since a plurality of pieces of information are recorded within the secured space, it is possible to increase the effect of restricting secondary copying.

According to this invention, since a plurality of kinds of information are recorded within the secured space, it is possible to express the source of copied matter.
The above and further objects and features of the invention will more fully be apparent from the following detailed description with accompanying drawings.

### BRIEF DESCRIPTION OF THE SEVERAL VIEWS OF THE DRAWINGS

FIG. 1 is an explanatory view showing the structure of a print system built using a digital all-in-one according to an embodiment;
FIGS. 2A and 2B are conceptual views showing one example of a user table and a division table;
FIG. 3 is a schematic cross sectional view for explaining the detail of an image recording section;
FIG. 4 is an explanatory view for explaining a space for recording additional information;
FIG. 5 is a schematic view showing the state in which additional information is recorded;
FIG. 6 is a schematic view showing the state in which an image recording space is expanded maximally;
FIG. 7 is a schematic view showing the state in which additional information is recorded in a space secured by deleting a part of the image;
FIG. 8 is a schematic view showing one example of a print setting screen created by a printer driver;
FIG. 9 is a schematic view showing one example of additional information setting screen which is displayed when an additional information setting button is pressed;
FIG. 10 is a conceptual view showing the structure of a print job created by the printer driver; and
FIG. 11 is a flowchart for explaining the steps of processing performed by a digital all-in-one.

### DETAILED DESCRIPTION OF THE INVENTION

The following description will explain specifically an embodiment in which an image recording apparatus according to the present invention is applied to a digital all-in-one having a printer function, a copy function, etc., with reference to the drawings illustrating the embodiment.

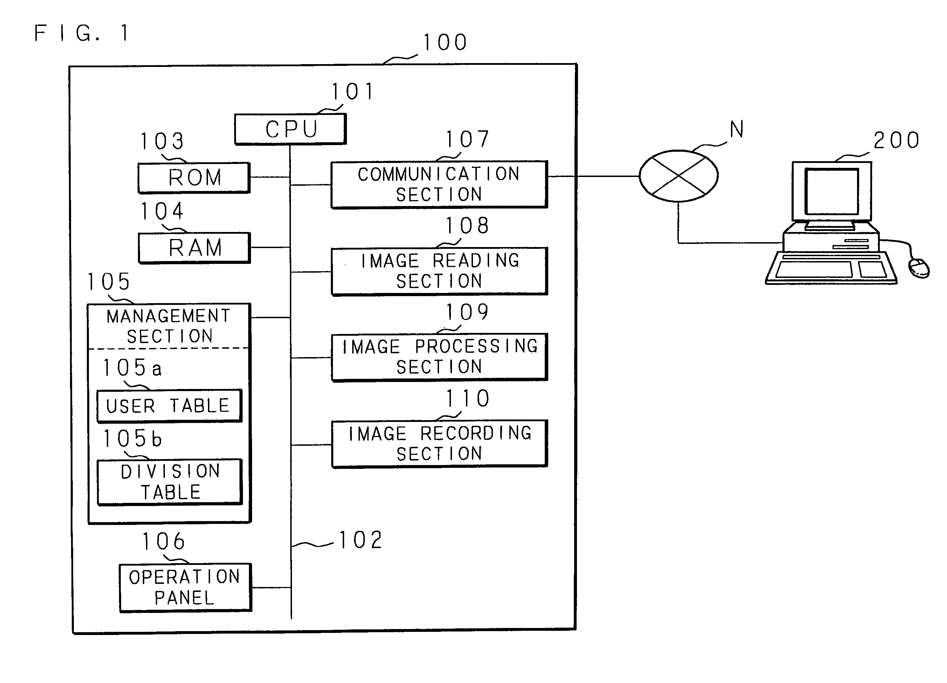

FIG. 1 is an explanatory view showing the structure of a print system built using the digital all-in-one of this embodiment. In FIG. 1, 100 is the digital all-in-one of this embodiment. An information processor 200 is connected to the digital all-in-one 100 through a communication network N. A driver program (printer driver) for using the digital all-in-one 100 through the communication network N is installed in the information processor 200, and the information processor 200 is constructed to execute a print process by transmitting a print job created by the printer driver to the digital all-in-one 100.

The digital all-in-one 100 comprises a CPU 101, and the CPU 101 is connected to hardware, such as a ROM 103, a RAM 104, a management section 105, an operation panel 106, a communication section 107, an image reading section 108, an image processing section 109, and an image recording section 110. In the ROM 103, a control program for controlling the respective hardware sections is stored. When the CPU 101 loads and executes the control program on the RAM 104, the respective hardware sections are controlled to operate as an image recording apparatus of the present invention.

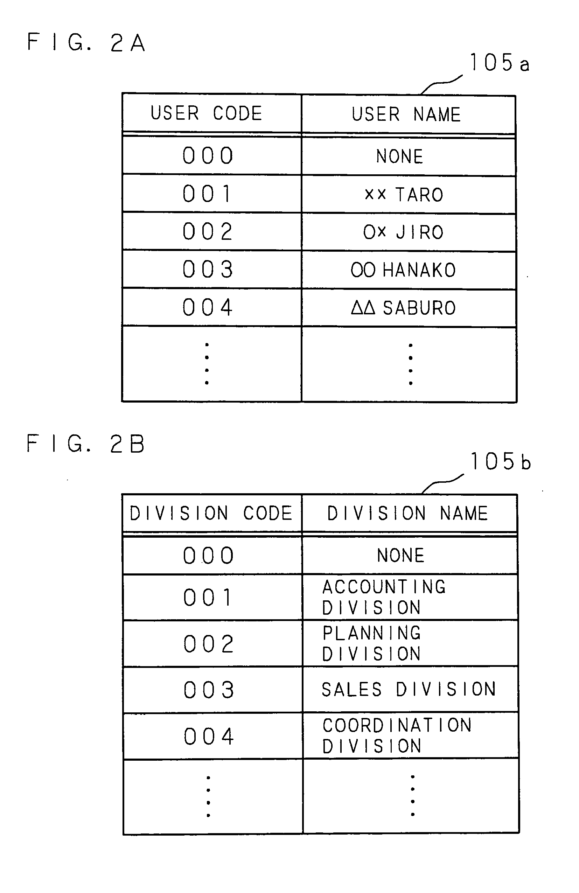

The management section 105 comprises a non-volatile semiconductor memory, and a part of the memory space is used as a user table 105a and a division table 105b. FIGS. 2A and 2B are conceptual views showing one example of the user table 105a and division table 105b. In the user table 105a, a user code (for example, a three-digit numerical value) assigned to a user of the digital all-in-one 100 and the user name are stored in association with each other (see FIG. 2A). Similarly, in the division table 105b, a division code (for example, a three-digit numerical value) assigned to each division and the division name are stored in association with each other (see FIG. 2B).

The operation panel 106 comprises an operation section for receiving an operation instruction from the user, and a display section for displaying setting values, etc. inputted through the operation section. The operation section includes operation keys and numerical keys for receiving the operation of switching the functions of the digital all-in-one 100, and settings about the number of copies to be printed, density adjustment, etc. The display section includes, for example, a liquid crystal display device, and displays various kinds of setting values set in the operation section, information to be reported to the user, and so on.

The communication section 107 comprises a communication interface for connecting to the communication network N, and receives a print job transmitted from the information processor 200 through the communication network N and transmits information to be notified to the information processor 200. The communication section 107 controls the transmission and reception of such various kinds of information. Moreover, when a print job is received from the information processor 200, the communication section 107 analyzes the print job and creates image data to be outputted. The created image data is transferred to the image processing section 109.

The image reading section 108 comprises a light source for irradiating light onto a document to be read, an image sensor such as a CCD (Charge Coupled Device), and an AD converter (not shown), converts the image on a document set in a predetermined reading position into an analog electric signal by focusing the image on the image sensor, and converts the obtained analog electric signal into a digital signal by the AD converter. Further, by correcting the digital signals obtained by the AD conversion with respect to the light distribution characteristics of the light source, variations in the sensitivity of the image sensor, etc. in reading the document, digital image data is created. The image data obtained in the image reading section 108 is transferred to the image processing section 109.

The image processing section 109 performs predetermined image processing on image data transferred from the communication section 107, and image data transferred from the image reading section 108. The contents of processing performed in the image processing section 109 will be described in detail later. Here, the process of securing a space for recording information to be added to an output image is performed. The image data processed in the image processing section 109 is transferred to the image recording section 110.

The image recording section 110 records an image on paper based on the image data transferred from the image processing section 109. Therefore, the image recording section 110 comprises an electrifier for charging a photoreceptor drum to a predetermined electric potential; a laser writing device for emitting laser light according to externally received image data and generating an electrostatic latent image on the photoreceptor drum; a developing device for visualizing the electrostatic latent image formed on the photoreceptor drum surface by supplying toner; and a transfer device (not shown) for transferring the toner image formed on the photoreceptor drum surface to paper, and records an image desired by the user on paper by an electrophotographic method. Note that it may be possible to use a structure in which an image is recorded using an inkjet method, a thermal transfer method, a sublimation method, etc. as well as a structure in which an image is recorded by the electrophotographic method using a laser writing device.

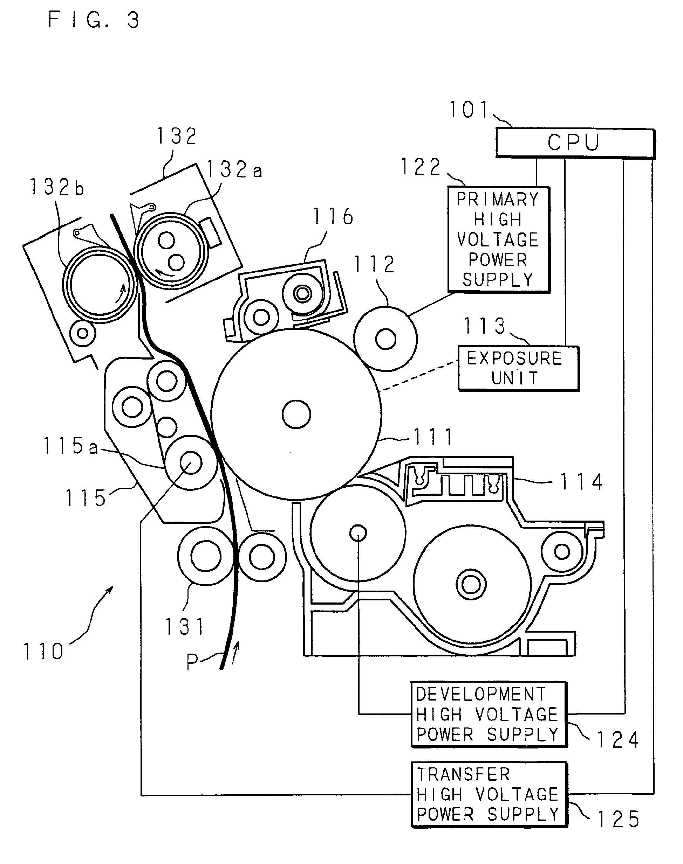

FIG. 3 is a schematic cross sectional view for explaining the detail of the image recording section 110. In order to record an image on paper by the electrophotographic method, the image recording section 110 comprises a photoreceptor drum 111, an electrifier 112, an exposure unit 113, a development unit 114, a transfer unit 115, and a cleaning unit 116. A roller-type electrifier constructed to come into contact with the photoreceptor drum 111 is used for the electrifier 112, and uniformly charges the surface of the photoreceptor drum 111 to a predetermined electric potential by a voltage supplied from a primary high voltage power supply 122. Note that it may be possible to use a brush-type electrifier, or a charger-type electrifier, instead of the roller-type electrifier. The exposure unit 113 is composed of a laser scanning unit (LSU) comprising a laser irradiating section, and a reflection mirror and a polygon mirror (not shown) positioned so that laser light emitted from the laser irradiating section is irradiated on the photoreceptor drum 111. It may be possible to use a write head including light emitting elements, such as EL (Electro Luminescence) or LED (light emitting diode), arranged in an array, instead of the laser irradiating section. The development unit 14 contains black toner, and visualizes an electrostatic latent image formed on the surface of the photoreceptor drum 111 by supplying toner. At this time, a high voltage (development bias) is applied to the toner by a development high voltage power supply 124, and a toner image is formed on the photoreceptor drum 111 by supplying the toner being charged to a predetermined charged polarity.

The toner image formed on the photoreceptor drum 111 is transferred onto paper P by the transfer unit 115. The transfer unit 115 comprises a transfer roller 115a disposed to face the photoreceptor drum 111, and transfers the toner image on the photoreceptor drum 111 onto the paper P by applying a high voltage (transfer bias) of a polarity opposite to the charged polarity of the toner to the transfer roller 115a by a transfer high voltage power supply 125. Note that the paper P is separated and transferred one sheet at a time from a paper cassette (not shown), and then temporarily held by resist rollers 131 disposed under the transfer unit 115. The resist rollers 131 transport the paper P to a transfer space formed by the photoreceptor drum 111 and the transfer roller 115a in a timing so that the leading end of the toner image on the photoreceptor drum 111 is aligned with the leading end of the image recording space of the paper P.

The paper P having the transferred toner image is transported substantially perpendicularly, and reaches a fixing unit 132. The fixing unit 132 comprises a heat roller 132a and a pressure roller 132b, and fixes the toner image on the paper P by applying heat of the heat roller 132a to the paper P held between the two rollers 132a and 132b. The paper P having the fixed toner image is discharged out of the apparatus.

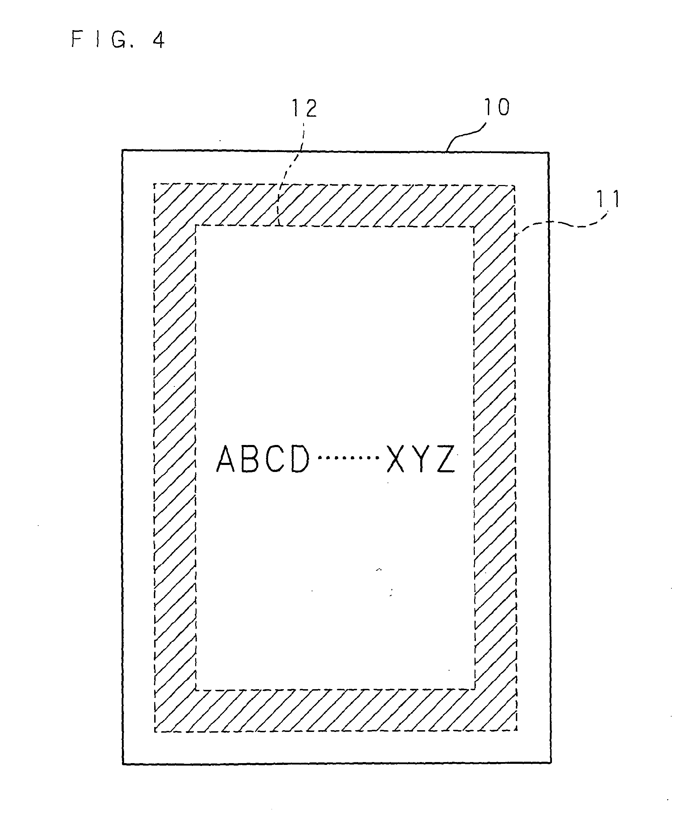

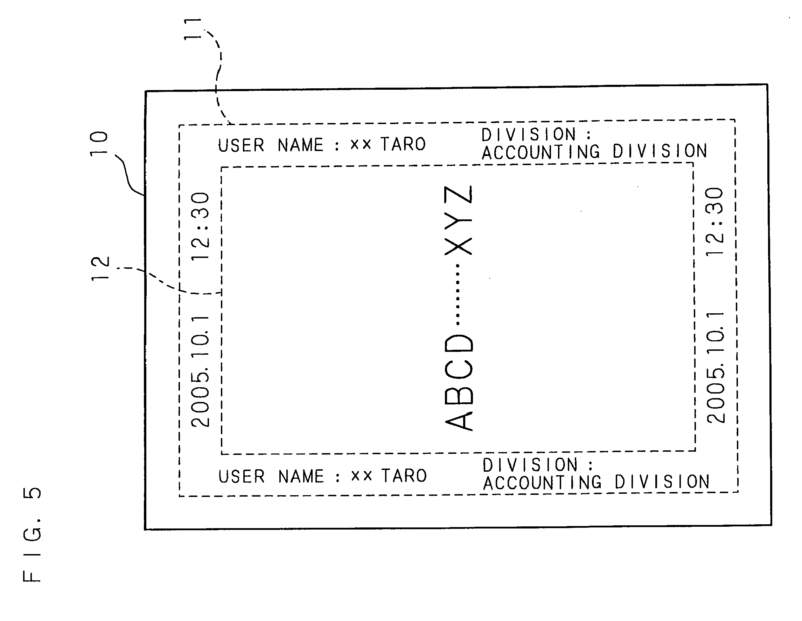

This embodiment is characterized by adding information expressing the source of an image (hereinafter referred to as the "additional information") to the outside of the recording space when recording the image on paper. FIG. 4 is an explanatory view for explaining a space for recording the additional information. For example, when recording an image by the electrophotographic method, it is necessary to pass the paper between the photoreceptor drum 111 and the transfer roller 115a by transporting the paper with the transport roller, etc. Therefore, a space where no image is recorded may be present on the paper due to the limitations of hardware. In other words, on a predetermined size paper 10, there is a printer margin depending on hardware. On the other hand, such information about the printer margin is held by the printer driver installed in the information processor 200, and, when outputting a document and graphics created by an arbitrary application, a recording space 12 is set so as not to record the image beyond a boundary 11 of the printer margin. In this embodiment, a space for recording additional information is secured outside the recording space 12 set by the information processor 200, but inside the boundary 11 of the printer margin, and the additional information is recorded in the secured space. FIG. 5 is a schematic view showing the state in which additional information is recorded. In the example shown in FIG. 5, the date and time information is recorded on the upper or lower side of paper, and the user information and division information are recorded on the left and right side of the paper.

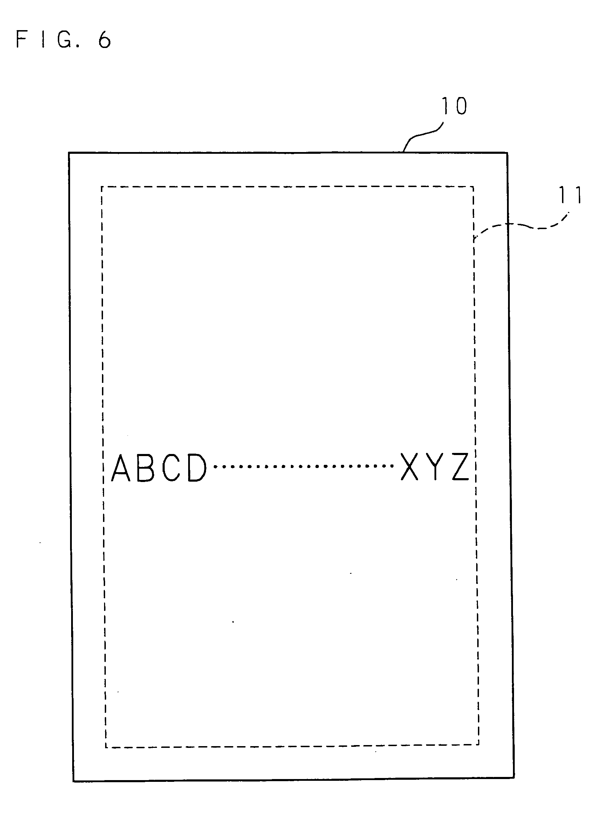

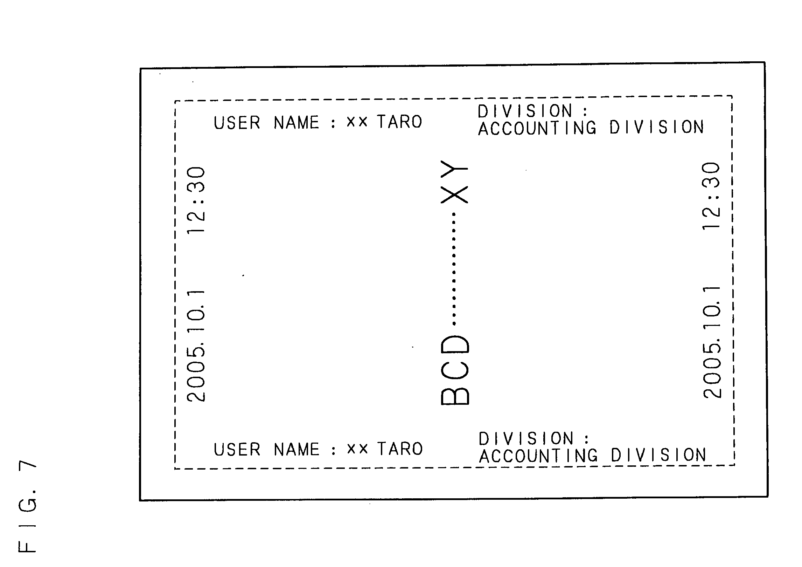

In general, the image recording space 12 is appropriately set, and some space often exists between the boundary 11 of the printer margin and the recording space 12. However, when the image recording space 12 is expanded maximally, there may be no space between the boundary 11 of the printer margin and the recording space 12. FIG. 6 is a schematic view showing the state in which the image recording space 12 is expanded maximally. In this case, in this embodiment, in order to secure the space for recording additional information, the original image to be recorded is deleted, and the additional information is recorded in the space produced by the deletion. FIG. 7 is a schematic view showing the state in which additional information is recorded in the space secured by deleting a part of the image.

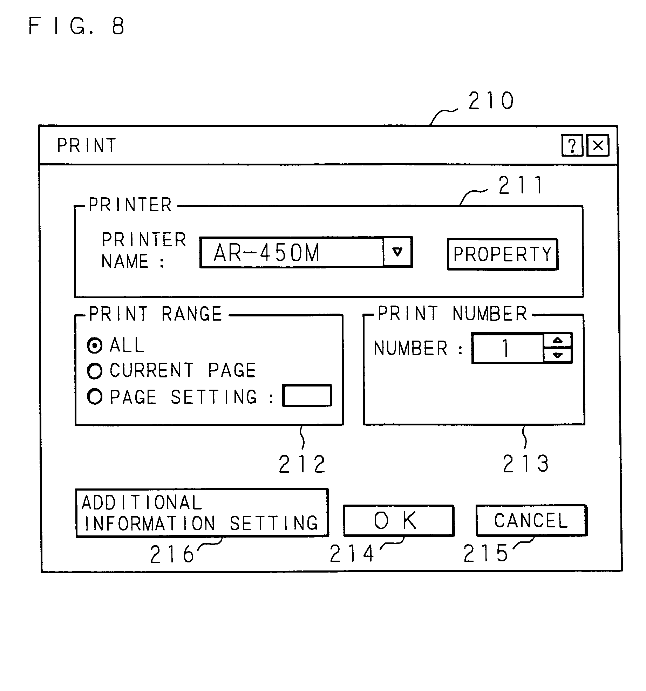

For example, an instruction to record such additional information may be given by the printer driver installed in the information processor 200. FIG. 8 is a schematic view showing one example of a print setting screen created by the printer driver. Arranged in this print setting screen 210 are a printer setting box 211 for selecting a printer or a digital all-in-one as a destination of a print job; a print range setting box 212 for setting a print range; and a print number setting box 213 for setting the number of copies to be printed. When an OK button 214 provided in a lower part of the print setting screen 210 is pressed, a print job is created based on the contents set on the print setting screen 210, and the print job is transmitted to the printer or digital all-in-one set in the print setting box 211. On the other hand, when a cancel button 215 is pressed, print settings are terminated without creating a print job.

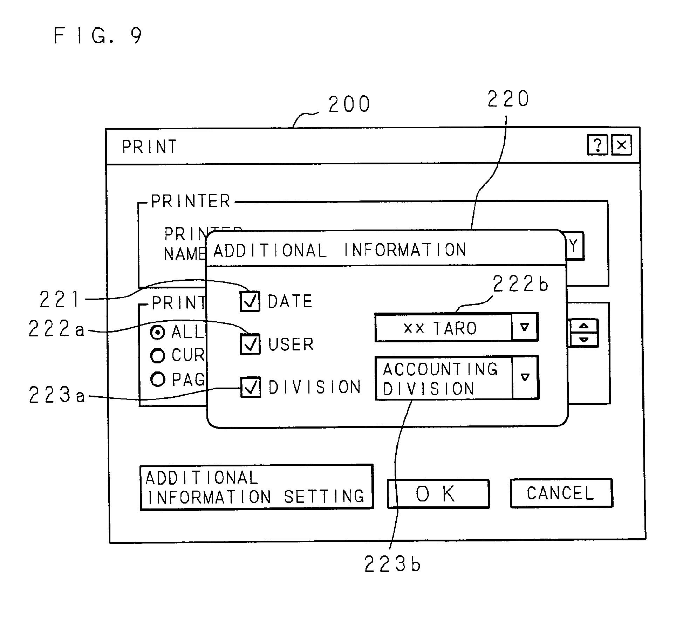

Further, an additional information setting button 216 is provided on the print setting screen 210 in order to set additional information to be recorded in addition to the image to be printed. FIG. 9 is a schematic view showing one example of an additional information setting screen 220 which is displayed when the additional information setting button 216 is pressed. On the additional information setting screen 220, it is possible add the date and time information, user name, and division name. Therefore, there are arranged a check box 221 for setting whether or not to add information about date and time; a check box 222a for setting whether or not to add the user name, a pull-down menu type selection box 222b for selecting a user name to be added; a check box 223a for setting whether or not to add the division name; and a pull-down menu type selection box 223b for selecting a division name to be added.

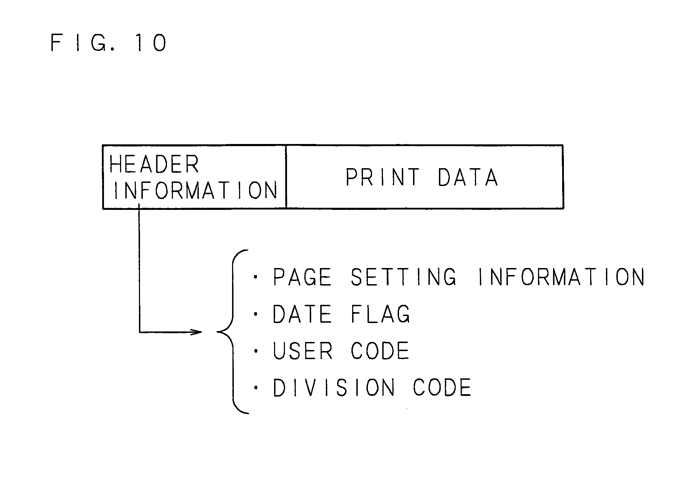

The contents set on the additional information setting screen 220 are fetched as header information when the printer driver creates a print job. FIG. 10 is a conceptual view showing the structure of a print job created by the printer driver. The print job is composed of header information including information such as page setting information, a date and time flag, a user code and a division code, and print data described in a predetermined page describing language. Here, the page setting information includes information about the margin of a page, and is set automatically or manually by an application used to create a document or graphics to be printed. The date and time flag is a flag for specifying whether or not to add date and time information, and is set on the above-mentioned additional information setting screen 220. The user code is a code for specifying a user name, and uses a code common to user codes registered in the digital all-in-one 100. When no adding the user name is set, or, in other words, when the check box 222a on the additional information setting screen 220 is not checked, "000" is assigned as the user code. Further, the division code is a code for specifying a division name, and uses a code common to division codes registered in the digital all-in-one 100. When no adding the division name is set, or, in other words, when the check box 223a on the additional information setting screen 220 is not checked, "000" is assigned as the division code.

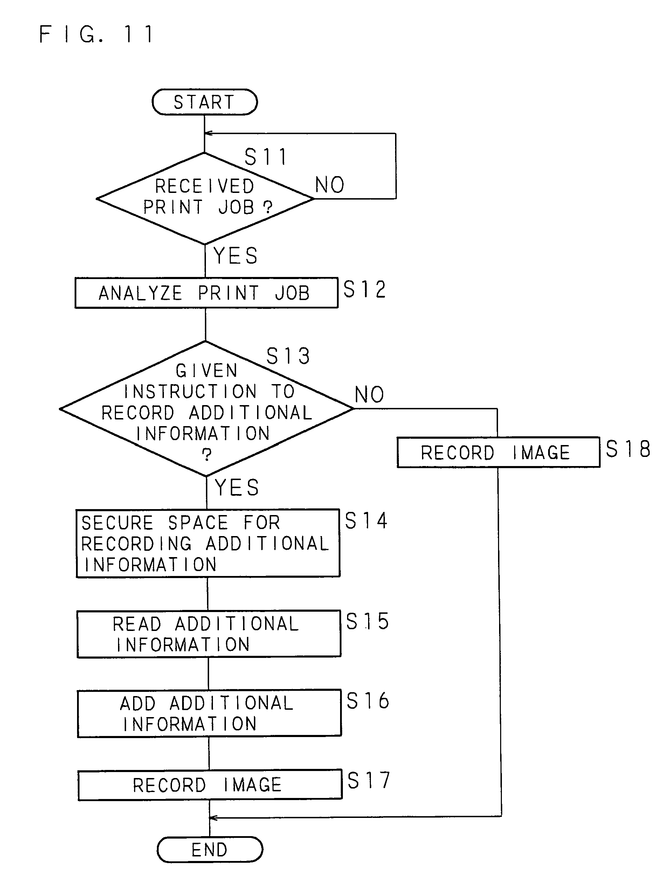

Next, the following description will explain the operation to be performed when the digital all-in-one 100 receives a print job thus created. FIG. 11 is a flowchart for explaining the steps of processing performed by the digital all-in-one 100. The CPU 101 of the digital all-in-one 100 determines, based on the information received by the communication section 107, whether or not a print job has been received (step S11). If a print job has not been received (S11: NO), the digital all-in-one 100 waits until a print job is received.

If the CPU 101 determines that a print job has been received (S11: YES), the communication section 107 analyzes the print job (step S12), extracts information such as the page setting information, date and time flag, user code and division code from the header information, and analyzes the page describing language describing the print data in order to generate image data to be outputted. The generated image data is transferred to the image processing section 109.

Next, the CPU 101 determines, based on the information extracted from the print job, whether or not an instruction to record additional information is given (step S13). When the date and time flag is on, when a code other than "000" is set in the user code, or when a code other than "000" is set in the division code, it is possible to determine that an instruction to record additional information is given.

When the CPU 101 determines that an instruction to record additional information is given (S13: YES), it secures a space for recording additional information (step S14). More specifically, the space for recording additional information is determined based on the boundary of the printer margin determined based on the limitations of hardware of the digital all-in-one 100 and the image recording space determined by the page setting information, and the process of deleting the image included in the space is performed by the image processing section 109.

Next, the CPU 101 reads the additional information instructed to be recorded (step S15). In other words, when an instruction to add date and time information is given, the date and time information is obtained from a clock (not shown). Moreover, when an instruction to record the user name is given, the user name corresponding to the extracted user code is read from the user table 105a, and, when an instruction to record the division name is given, the division name corresponding to the extracted division code is read from the division table 105b.

Next, the read additional information is added to the space secured in step S14 (step S16), image data to which the additional information is added is transferred to the image recording section 110, and an image is recorded on paper by the image recording section 110 (step S17).

On the other hand, when the date and time flag extracted from the header information of the print job in step S12 is off, the user code is "000" and the division code is "000", then the CPU 101 determines that an instruction to record additional information is not given (S13: NO), transfers the image data transferred to the image processing section 109 to the image recording section 110, and records the image on paper (step S18).

Although this embodiment sets whether or not it is necessary to record additional information when creating a print job in the image processing section 200, it may be possible, for example, to receive whether or not it is necessary to record additional information through the operation panel 106 when copying a document.

Moreover, in this embodiment, although the date and time information, user information and division information are recorded as the additional information, it is of course not necessary to limit the additional information to these kinds of information. Further, in this embodiment, although the additional information is recorded using characters, it may be possible to record any graphics as additional information. For example, dot patterns corresponding to the user code and the division code, respectively, may be prepared, and dot patterns corresponding to the user code and division code may be recorded when recording the additional information. In this case, since the space to be secured can be made smaller compared to that required for recording character information, it is possible to minimize a space of the original image to be deleted.

## Claims

1. An image recording apparatus (100), which sets a space on a sheet that permits recording of images, for recording an image based on externally received image data within the space on a sheet, **characterized by** comprising:
receiving means (107) for receiving settings about information to be recorded together with the image;
space securing means (109) for securing a space for recording the information within the set space; and
means (110) for recording the information within the secured space when recording the image on a sheet.

2. An image recording apparatus (100) for recording an image based on externally received image data on a sheet, **characterized by** comprising:
receiving means (107) for receiving settings about information to be recorded together with the image;
space securing means (109) for securing a space for recording the information outside a recording space of the image; and
means (110) for recording the information within the secured space when recording the image on a sheet.

3. An image recording apparatus (100), which sets a space on a sheet that permits recording of images, for recording an image based on externally received image data within the space on a sheet, **characterized by** comprising:
receiving means (107) for receiving settings about information to be recorded together with the image;
space securing means (109) for securing a space for recording the information within the set space, but outside a recording space of the image; and
means (110) for recording the information within the secured space when recording the image on a sheet.

4. The image recording apparatus (100) according to any one of claims 1 to 3, wherein said space securing means (109) comprises means for deleting an image that exists in the space to be secured.

5. The image recording apparatus (100) according to any one of claims 1 to 3, wherein a plurality of pieces of the information are recorded within the space secured by said space securing means (109).

6. The image recording apparatus (100) according to any one of claims 1 to 4, wherein said receiving means (107) receives settings about a plurality of kinds of information to be recorded together with the image, and the plurality of kinds of information are recorded within the space secured by said space securing means (109).
